# EUROPÄISCHE PATENTSCHRIFT

(11) **EP 4 261 450 B1**
(45) Veröffentlichungstag und Bekanntmachung des Hinweises auf die Patenterteilung: **21.05.2025**
(21) Anmeldenummer: 23163366.0
(22) Anmeldetag: 22.03.2023
(51) Int. Cl.: F16L 37/084, F16L 37/14, F16L 37/00, F16L 47/00, F16L 15/08, F16L 57/00

(54) **FLUIDVERBINDUNGSEINHEIT**
FLUID CONNECTION UNIT
UNITÉ DE RACCORDEMENT FLUIDIQUE

(30) Priorität: 14.04.2022 DE 102022109283
(43) Veröffentlichungstag der Anmeldung: 18.10.2023
(73) Patentinhaber: Fränkische Rohrwerke Gebr. Kirchner GmbH & Co. KG, 97486 Königsberg (DE)
(72) Erfinder: FRETER, Ludwig, 97437 Haßfurt (DE)
(74) Vertreter: Weickmann & Weickmann PartmbB

(56) Entgegenhaltungen:
- EP-A1- 2 284 431
- EP-B1- 0 733 847

## Beschreibung

Die vorliegende Erfindung betrifft eine Fluidverbindungseinheit, welche dazu eingerichtet ist, eine Fluidleitung mit einem Anschlussstück zu verbinden.

Beispielsweise bei Wasserinstallationen (z.B. Heizung oder Trinkwasser) kommen Schraubverbindungen für unterschiedliche Anwendungen zum Einsatz, so wie Anbindung eines Wasserzählers, einer Pumpe, Wechsel von Rohrsystemen etc. Gemäß Stand der Technik werden diese Verbindungen zumeist mit zöllischen, konischen Gewinden ausgeführt. Das kegeliche Außengewinde wird dabei mit Dichtmittel (Hanf, Dichtband, Dichtschnur) versehen und in ein konisches Innengewinde geschraubt, um eine dichte Verbindung herzustellen. Dies ist mit zusätzlichem Arbeitsaufwand verbunden. Daher kann es vorkommen, dass die Verbindung undicht wird, weil das Innengewindeteil durch zu viel Dichtmittel reißt oder durch zu wenig Dichtmittel nicht dichtet. Ein Wasserschaden mit erheblichem finanziellen Schaden für den Eigentümer kann hier die Folge sein.

Aus dem Dokument EP 0 733 847 B1, welches als nächstliegender Stand der Technik erachtet wird, ist eine Fluidverbindungseinheit bekannt, welche dazu eingerichtet ist, eine Fluidleitung mit einem Anschlussstück zu verbinden, wobei die Fluidverbindungseinheit einen Grundkörper und ein Einsatzelement mit einem Innengewinde umfasst, wobei das Einsatzelement in den Grundkörper derart einsetzbar ist, dass es entgegen der Einführrichtung zerstörungsfrei unlösbar angeordnet ist. Ferner sei auf das Dokument EP 2 284 431 A1 hingewiesen.

Die vorliegende Erfindung stellt sich daher die Aufgabe, eine Fluidverbindungseinheit mit verbesserten Eigenschaften bereitzustellen.

Diese Aufgabe wird gemäß der vorliegenden Erfindung durch eine Fluidverbindungseinheit nach Anspruch 1 gelöst.

Somit kann der Grundkörper und das Einsatzelement gesondert voneinander und insbesondere in einer vereinfachten Herstellungsweise ausgebildet werden und anschließend miteinander zu der erfindungsgemäßen Fluidverbindungseinheit verbunden werden. Auf diese Weise lassen sich Geometrien und/oder Materialkombinationen realisieren, welche auf herkömmliche Weise, insbesondere bei einer integralen Ausbildung dieser beiden Komponenten, nicht möglich wäre(n).

Insbesondere kann das Einsatzelement in demjenigen Bereich, in welchem das Einsatzelement die Verbindung mit dem Grundkörper eingeht, nichtrotationssymmetrisch, insbesondere hexagonal, ausgebildet sein, so dass eine Rotation des Einsatzelements relativ zu dem Grundkörper in dem aneinander verbundenen Zustand im Wesentlichen verhindert wird. Auf diese Weise kann das Anschlussstück in das Einsatzelement eingeschraubt werden, ohne dass sich das Einsatzelement relativ zu dem Grundkörper verdreht.

Ferner kann der Grundkörper an seiner Außenseite wenigstens zwei zueinander parallel verlaufende, und insbesondere in Bezug auf eine Mittelachse des Grundkörpers diametral gegenüberliegende, Flächen aufweisen. Diese beiden parallel verlaufenden Flächen an der Außenseite des Grundkörpers können beispielsweise als eine Schlüsselweite für ein Werkzeug verwendet werden, um den Grundkörper mit dem darin eingesetzten Einsatzelement unter Verwendung des Werkzeugs vereinfacht rotieren zu können, beispielsweise relativ zu dem Anschlussstück. In Verbindung mit dem weiter oben beschriebenen Merkmal, dass das Einsatzelement in demjenigen Bereich, in welchen das Einsatzelement die Verbindung mit dem Grundkörper eingeht, als Polygon, beispielsweise hexagonal, ausgebildet ist, kann auch eine Außenseite des Grundkörpers entsprechend als Polygon, beispielsweise hexagonal, ausgebildet sein. Somit kann sich eine im Wesentlichen gleichbleibende Wandstärke des Grundkörpers entlang des Umfangs davon in diesem Bereich ergeben.

Vorteilhafterweise kann der Grundkörper aus einem Hochtemperaturkunststoff, insbesondere aus PPSU, ausgebildet sein. Da prozessbedingt bei der Herstellung von Bauteilen aus einem Hochtemperaturkunststoff nur in einer sehr limitierten Weise nach radial innen ragende Vorsprünge, insbesondere Innengewinde, ausgebildet werden können, müssen bei Grundkörpern gemäß dem Stand der Technik, welche aus einem Hochtemperaturkunststoff hergestellt sind, in einer aufwändigen Weise Gewindebuchsen mit einem Innengewinde nachträglich eingebracht werden, zum Beispiel unter Verwendung eines Vibrationsverfahrens. Die vorliegende Erfindung erlaubt daher, die vorteilhaften Eigenschaften eines Grundkörpers aus einem Hochtemperaturkunststoff vollständig auszunutzen und diesen dennoch in einer einfachen Weise mit einem Innengewinde zu versehen.

Der Grundkörper und/oder das Einsatzelement können unter Verwendung eines Spritzgussverfahrens hergestellt sein. Dies erlaubt eine kosteneffiziente Herstellung der erfindungsgemäßen Fluidverbindungseinheit.

Auch kann das Einsatzelement PE_RT (Polyethylen mit erhöhter Temperaturbeständigkeit) oder vernetztes Polyethylen, zum Beispiel PEX oder PEX_C, oder PTFE umfassen. Die voranstehend beschriebenen Materialien, wie beispielsweise das strahlenvernetzte PEX_C, können dem Einsatzelement bzw. dem Innengewinde davon eine zu dem Anschlussstück bzw. zu dem Außengewinde davon selbst-abdichtende Eigenschaft verleihen.

In einer Weiterbildung der vorliegenden Erfindung kann das Einsatzelement an seinem dem Innengewinde entgegengesetzten Ende einen zylindrischen Bereich aufweisen, dessen Außendurchmesser in etwa dem Durchmesser des Gewindes entspricht und welcher in seinem Inneren einen Fluidströmungskanal definiert. Somit kann erreicht werden, dass ein in dem zylindrischen Bereich definierter Fluidströmungskanal zu einem innerhalb des Außengewinde des Anschlussstücks definierten Fluidströmungskanal einen im Wesentlichen gleichen Durchmesser aufweist, um über die Fluidverbindungseinheit und die daran angrenzenden Bereiche der angeschlossenen Komponenten hinweg im Wesentlichen gleichbleibende Fluidströmungseigenschaften zu gewährleisten. Der Fluidströmungskanal des Einsatzelements kann hier vorteilhafterweise in Fluidverbindung mit dem Fluidströmungskanal des Grundkörpers, insbesondere entlang einer gemeinsamen Achse, stehen.

Dabei kann der zylindrische Bereich des Einsatzelements eine oder mehrere in Umfangsrichtung umlaufende Nuten zur Aufnahme eines Dichtelementes oder Dichtschnur aufweisen. Durch eine Abdichtung des Einsatzelements gegenüber der Innenseite des Grundkörpers in diesem Bereich kann verhindert werden, dass Fluid an einem inneren Kontaktbereich des Einsatzelements mit dem Grundkörper eintreten und zu einer Außenseite der Fluidverbindungseinheit austreten kann.

Insbesondere kann das Innengewinde des Einsatzelements konisch ausgebildet sein. Durch diese konische Ausbildung des Innengewindes kann eine selbst-abdichtende Eigenschaft erreicht werden, welche bei derartigen Fluidverbindungen oftmals normativ gefordert oder zumindest gewünscht sein kann.

Das Einsatzelement weist an seiner Außenseite wenigstens einen nach radial außen vorstehenden Rastnoppen auf, welcher dazu eingerichtet ist, mit einer entsprechenden Ausnehmung des Grundkörpers einzugreifen. Insbesondere können an allen Flächen des Polygons, beispielsweise des Sechskantes, noppenartige Vorsprünge ausgebildet sein. In dem Fall, dass das Einsatzelement beim Einschrauben des Anschlussstücks radial gepresst/geweitet wird, ergibt sich so eine sehr stabile Verbindung, welche nur durch Zerstörung, zum Beispiel Abscherung, lösbar sein kann.

Hierbei kann die wenigstens eine Ausnehmung des Grundkörpers, mit welcher ein jeweiliger Rastnoppen im verbundenen Zustand von Grundkörper und Einsatzelement eingreift, als Durchgangsloch ausgebildet sein, welches die Wandung des Grundkörpers vollständig durchdringt. Derartige Durchgangslöcher lassen sich preisgünstig mittels ein- und ausfahrbarer Bolzen herstellen, insbesondere bei Hochtemperaturmaterial, wie PPSU, da hier Zerfallskerne aufgrund der notwendigen Kühlung/Temperierung, wenn überhaupt, nur bedingt verwendbar sein können.

Alternativ oder zusätzlich kann der Grundkörper eine Mehrzahl von Ausnehmungen aufweisen, welche jeweils eine Mittelachse ausweisen, von welchen wenigstens zwei, insbesondere alle, im Wesentlichen parallel zueinander verlaufen. Diese jeweilige Mittelachse kann insbesondere als eine Achse verstanden werden, welche entlang einer Haupterstreckungsrichtung durch die Wandung des Grundkörpers und durch den Schwerpunkt eines orthogonal dazu gebildeten Querschnitts der Ausnehmung verläuft. Hierdurch kann erreicht werden, dass ein Spritzgusswerkzeug, welches in einer einfachsten Ausbildung zweiteilig ausgebildet ist, parallel verlaufende und nach innen ragende stiftartige Vorsprünge aufweisen kann, und dass die beiden Hälften dieses Spritzgusswerkzeugs in einer einfachen Weise voneinander entfernt werden können, um das Spritzgussteil zu entnehmen.

Das Einsatzelement kann ferner einen Absatz aufweisen, welcher sich von einem Längsende des Einsatzelements, insbesondere eines Längsendes des äußeren Polygons davon, erstreckt. Der Absatz kann dabei im Wesentlichen ringförmig ausgebildet sein. Das zentrale Innengewinde des Einsatzelements kann sich durch den Absatz hindurch fortsetzen. Der Absatz kann insbesondere so ausgebildet und angeordnet sein, dass er sich auch nach der Verbindung des Einsatzelements mit dem Grundkörper, in Bezug auf die Mittelachse des Fluidströmungskanals, von dem Grundkörper weg erstreckt, das heißt in dieser axialen Richtung weiter erstreckt als der Grundkörper. Vorzugsweise weist der Absatz an seinem freien Ende eine ebene Stirnfläche auf, deren Ebene insbesondere zu der Mittelachse des Fluidströmungskanals im Wesentlichen orthogonal ausgerichtet ist.

Wird die Fluidverbindungseinheit nun mit einer übergeordneten Baugruppe verbunden, so kann der Absatz an dieser anliegen und so eine zusätzliche Dichtung bereitstellen. In einer möglichen Ausgestaltung, kann der Absatz dabei plastisch deformiert werden, um eine sich in einer dichtenden Weise an die Gegenfläche der übergeordneten Baugruppe anpassen zu können. Der Absatz kann zum Beispiel um 1 mm bis 5 mm, vorzugsweise um 2 mm, von dem restlichen Einsatzelement, insbesondere von dessen Polygon, beziehungsweise von dem Grundkörper in axialer Richtung vorstehen. Im Folgenden wird die vorliegende Erfindung anhand zweier Ausführungsbeispiele mit Bezug auf die begleitenden Zeichnungen beschrieben werden. Es stellt dar:
- Figur 1: eine perspektivische Ansicht einer ersten Ausführungsform einer erfindungsgemäßen Fluidverbindungseinheit;
- Figur 2: eine perspektivische Ansicht eines Einsatzelements der ersten Ausführungsform der erfindungsgemäßen Fluidverbindungseinheit;
- Figur 3: eine Seitenquerschnittsansicht der Fluidverbindungseinheit aus Figur 1;
- Figur 4: eine perspektivische Explosionsansicht einer zweiten Ausführungsform einer Fluidverbindungseinheit, wobei diese zweite Ausführungsform nicht erfindungsgemäß ist;
- Figur 5: eine Seitenquerschnittsansicht der Fluidverbindungseinheit aus Figur 4; und
- Figur 6: eine perspektivische Ansicht einer zweiten Ausführungsform des Einsatzelements.

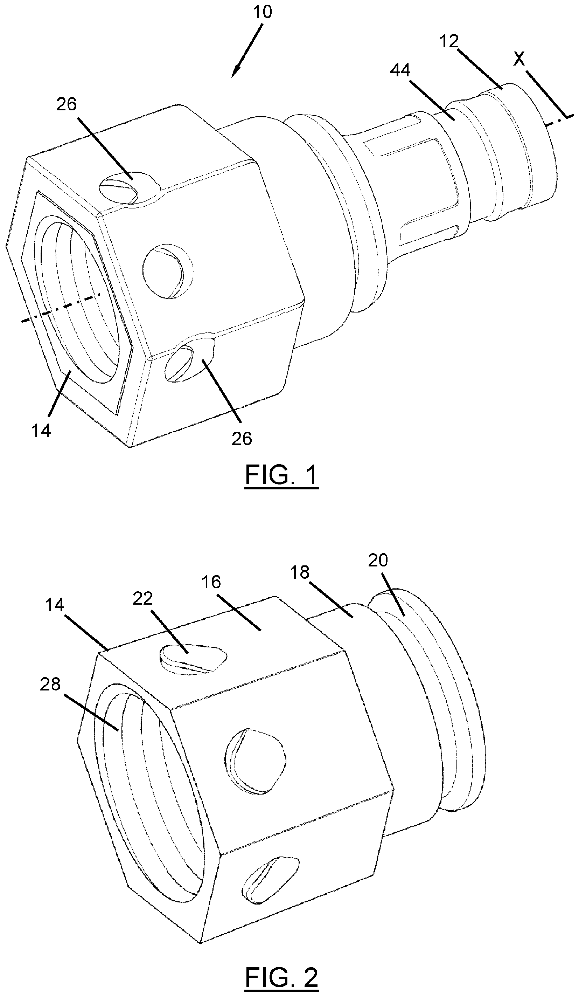

In Figur 1 ist eine erfindungsgemäße Fluidverbindungseinheit allgemein mit dem Bezugszeichen 10 bezeichnet. Die Fluidverbindungseinheit 10 umfasst einen Grundkörper 12 und ein Einsatzelement 14.

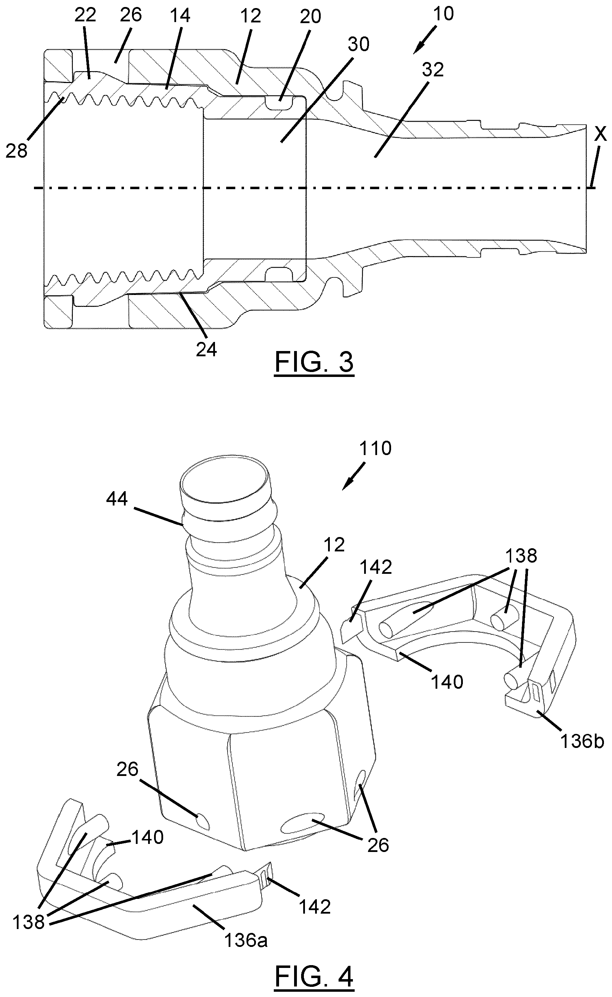

Das Einsatzelement 14 weist an seiner Außenseite in einem in Figur 2 links dargestellten Bereich eine hexagonale Form 16 und in einem in Figur 2 rechts dargestellten Bereich eine zylindrische Form 18 auf. An der zylindrischen Form 18 ist eine Nut 20 angeordnet, in welcher ein nicht dargestelltes Dichtungselement, wie beispielsweise ein O-Ring, aufgenommen werden kann, um eine Abdichtung zwischen dem Einsatzelement 14 und dem Grundkörper 12 auszubilden (siehe auch Figur 3).

An der hexagonalen Form 16 ist an jeder der sechs hexagonalen Flächen jeweils ein Rastnoppen 22 vorgesehen, welcher von einer jeweiligen Fläche nach radial außen vorsteht. Dabei erhebt sich eine radial äußere Fläche eines jeweiligen Rastnoppens 22 von einer in Figur 2 dargestellten rechten Seite, an welcher ein jeweiliger Rastnoppen 22 mit der Fläche der hexagonalen Form 16 im Wesentlichen bündig ist, zu einer in Figur 2 links dargestellten Seite hin zunehmend nach radial außen. Auf diese Weise kann das Einsatzelement 14 in eine entsprechende Aufnahme 24 des Grundkörpers 12 soweit eingeschoben werden, bis ein jeweiliger Rastnoppen 22 mit einer zugehörigen Ausnehmung 26 eingreift/verrastet (siehe auch Figur 3). Somit kann das Einsatzelement 14 in der Aufnahme 24 des Grundkörpers 12 sowohl rotatorisch über seine Außenform als auch axial durch den Eingriff der Rastnoppen 22 gesichert werden.

Das Einsatzelement 14 weist an seiner Innenseite ein Innengewinde 28 auf, welches hier konisch ausgebildet ist und sich von einer in Figur 3 linken Seite zu einer in Figur 3 rechten Seite des Innengewindes 28 verjüngt. An der in Figur 3 dargestellten rechten Seite des Innengewindes 28 schließt sich ein im Wesentlichen zylindrischer Fluidströmungskanal 30 an, welcher radial innerhalb des Bereichs mit der zylindrischen Form 18 angeordnet ist. Dieser zylindrische Fluidströmungskanal 30 geht an einer in Figur 3 rechts dargestellten Seite in einen Fluidströmungskanal 32 des Grundkörpers 12 über, wobei hier ein Außendurchmesser des Bereichs mit der zylindrischen Form 18 des Einsatzelements 14 im Wesentlichen einem nominalen Innendurchmesser des Innengewindes 28 entspricht.

Wird nun ein Anschlussstück in das Innengewinde 28 des Einsatzelements 14 eingeschraubt, so wird aufgrund des konischen Verlaufs des Innengewindes 28 und aufgrund der elastischen Materialeigenschaften des Einsatzelements 14 dieses nach radial außen gedrängt, wodurch der Eingriff zwischen den Rastnoppen 22 und den jeweiligen Ausnehmungen 26 zusätzlich verstärkt wird.

Wie insbesondere in Figur 1 zu erkennen ist, weisen die drei in Figur 1 sichtbaren Ausnehmungen 26, welche hier als Durchgangslöcher durch die Wandung des Grundkörpers 12 ausgebildet sind, zueinander parallel verlaufende Mittelachsen auf. An einer in Bezug auf eine Mittelachse X der Fluidverbindungseinheit 10 diametral gegenüberliegenden Seite weist der Grundkörper 12 in der dargestellten Ausführungsformen drei weitere Ausnehmungen 26 auf, von welchen eine jeweilige mit einer entsprechenden der in Figur 1 sichtbaren Ausnehmungen 26 flutet, so dass drei den Grundkörper 12 von Außenseite zu entgegengesetzter Außenseite vollständig durchdringende Durchgangslöcher 26 gebildet werden.

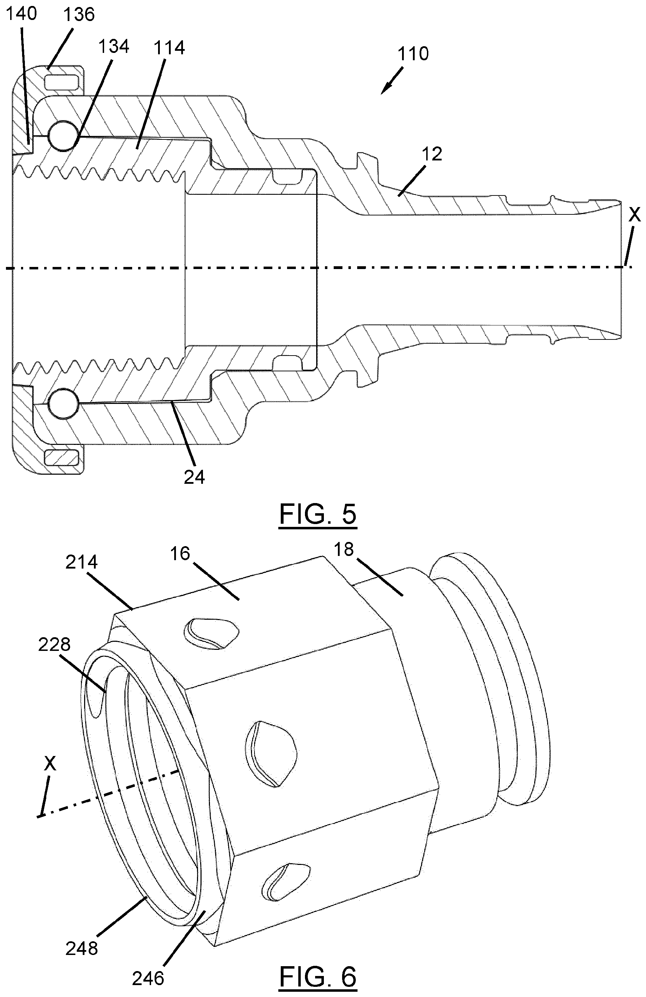

In den Figuren 4 und 5 ist nun eine zweite Ausführungsform 110 einer Fluidverbindungseinheit dargestellt, wobei diese zweite Ausführungsform nicht erfindungsgemäß ist, wobei in Bezug auf die zweite Ausführungsform 110 der Fluidverbindungseinheit explizit auf die Vorteile, Merkmale und Funktionen der ersten und erfindungsgemäßen Ausführungsform 10 der Fluidverbindungseinheit verwiesen sei, so dass im Folgenden lediglich auf die Unterschiede der zweiten Ausführungsform 110 zu der ersten Ausführungsform 10 hingewiesen sei. Gleiche Komponenten werden mit gleichen Bezugszeichen bezeichnet werden. Analoge, aber veränderte, Komponenten werden mit Bezugszeichen bezeichnet werden, welche relativ zu einer jeweiligen analogen Komponente der Fluidverbindungseinheit 10 um 100 erhöht sind.

Der Grundkörper 12 der Fluidverbindungseinheit 110 ist hier zu dem Grundkörper 12 der Fluidverbindungseinheit 10 gleich. Natürlich ist es ebenfalls denkbar, dass die Fluidverbindungseinheit 110 einen zu dem Grundkörper 12 Fluidverbindungseinheit 10 verschieden gestalteten Grundkörper aufweisen kann.

Im Gegensatz zu dem Einsatzelement 14 weist das Einsatzelement 114 (siehe Figur 5) keine nach radial außen vorstehenden Rastnoppen auf, sondern umfasst Einkerbungen 134, welche mit den Ausnehmungen 26 (siehe Figur 4), im in den Grundkörper 12 eingeschobenen Zustand des Einsatzelements 114, fluchtend ausgebildet sind. In diesem montierten Zustand können nun zwei Hälften 136a und 136b eines Sicherungselements 136 derart von außen auf den Grundkörper 12 aufgeschoben werden, dass stiftartige Vorsprünge 138, welche von den beiden Hälften 136a und 136b des Sicherungselements 136 nach radial innen und zu den Ausnehmungen 26 passend ausgebildet sind, durch die Ausnehmungen 26 des Grundkörpers 12 hindurch und mit den Einkerbungen 134 des Einsatzelements 114 in Eingriff treten. Auf diese Weise kann das Einsatzelement 114 in dem Grundkörper 12 gesichert werden.

In Figuren 4 und 5 ist ferner zu erkennen, dass das Sicherungselement 136 einen Rand 140 aufweist, welcher ein in Figur 5 links dargestelltes Ende umgreift, um auch hier mit dem Einsatzelement 114 in Kontakt zu treten und dieses axial zu sichern.

In Figur 4 ist ferner zu erkennen, dass die beiden Hälften 136a und 136b des Sicherungselements 136 im montierten Zustand miteinander über einen diametral in Bezug auf eine Hauptachse X der Fluidverbindungseinheit 110 beidseitig ausgebildeten Rastmechanismus 142 miteinander verrasten, so dass ein ungewolltes Lösen der beiden Hälften 136a und 136b des Sicherungselements 136 von dem Grundkörper 12 verhindert werden kann.

Der Grundkörper 12 weist an seinem der Aufnahme 24 zum Aufnehmen des Einsatzelements 14 bzw. 114 entgegengesetzten Ende einen Stutzen 44 auf, welcher dazu eingerichtet ist, die Fluidverbindungseinheit 10 bzw. 110 mit einer Fluidleitung zu verbinden, beispielsweise unter Verwendung einer (nicht dargestellten) Presshülse.

In Figur 6 ist eine perspektivische Ansicht einer zweiten Ausführungsform des Einsatzelements dargestellt. Zu der ersten Ausführungsform des Einsatzelements analoge Merkmale der zweiten Ausführungsform des Einsatzelements sind mit analogen Bezugszeichen bezeichnet, jedoch erhöht um die Zahl 200. Zu dem Einsatzelement 14 identische Merkmale des Einsatzelements 214 sind mit identischen Bezugszeichen bezeichnet.

Im Gegensatz zu dem Einsatzelement 14 weist das Einsatzelement 214 (siehe Figur 6) einen Absatz 246 auf, welcher entlang der Achsrichtung X von der hexagonalen Form 16, an der der zylindrischen Form 18 entgegengesetzten Seite, vorsteht. Der Absatz 246 ist im Wesentlichen ringförmig ausgebildet und weist eine zu der Achse X orthogonal ausgerichtete Stirnfläche 248 auf. Das zentrale Innengewinde 228 des Einsatzelements 214 setzt sich durch den Absatz 246 hindurch fort.

Bei einer Verbindung einer mit dem Einsatzelement 214 versehenen Fluidverbindungseinheit mit einer übergeordneten Baugruppe, kann sich der Absatz 246 an eine Gegenfläche der übergeordneten Baugruppe anpassen, wobei er in dieser Ausführungsform plastisch deformiert wird, und so eine Dichtung des Fluidströmungskanals 30 zu einer Außenseite hin bereitstellen.

## Patentansprüche

1. Fluidverbindungseinheit (10, 110), welche dazu eingerichtet ist, eine Fluidleitung mit einem Anschlussstück zu verbinden, umfassend einen Grundkörper (12), welcher aus Kunststoff ausgebildet ist, und
ein Einsatzelement (14, 114, 214), welches aus einem Kunststoff ausgebildet ist,
wobei der Grundkörper (12) in seinem Inneren einen Fluidströmungskanal (32) definiert, welcher sich von einem ersten Längsende des Grundkörpers (12) zu einem zweiten Längsende des Grundkörpers (12) erstreckt,
wobei das Einsatzelement (14, 114, 214) ein Innengewinde (28, 228) zur Verbindung mit dem Anschlussstück aufweist,
wobei an dem ersten Längsende des Grundkörpers (12) ein Stutzen (44) angeordnet ist, welcher zur Verbindung mit der Fluidleitung eingerichtet ist,
wobei an dem zweiten Längsende des Grundkörpers (12) eine Aufnahme (24) angeordnet ist, welche derart zur Aufnahme des Einsatzelements (14, 114, 214) eingerichtet ist, dass eine betriebsfeste Verbindung zwischen dem Grundkörper (12) und dem Einsatzelement (14, 114, 214) gebildet wird, welche zumindest in einer der Einführrichtung des Einsatzelements (14, 114, 214) in den Grundkörper (12) entgegengesetzten Richtung zerstörungsfrei unlösbar ist,
**dadurch gekennzeichnet, dass** das Einsatzelement (14, 214) an seiner Außenseite wenigstens einen nach radial außen vorstehenden Rastnoppen (22) aufweist, welcher dazu eingerichtet ist, mit einer entsprechenden Ausnehmung (26) des Grundkörpers (12) einzugreifen.

2. Fluidverbindungseinheit (10, 110) nach Anspruch 1,
**dadurch gekennzeichnet, dass** das Einsatzelement (14, 114, 214) in demjenigen Bereich (16), in welchem das Einsatzelement (14, 114, 214) die Verbindung mit dem Grundkörper (12) eingeht, nichtrotationssymmetrisch, insbesondere hexagonal, ausgebildet ist, so dass eine Rotation des Einsatzelements (14, 114, 214) relativ zu dem Grundkörper (12) in dem aneinander verbundenen Zustand im Wesentlichen verhindert ist.

3. Fluidverbindungseinheit (10, 110) nach einem der vorhergehenden Ansprüche,
**dadurch gekennzeichnet, dass** der Grundkörper (12) an seiner Außenseite wenigstens zwei zueinander parallel verlaufende, und insbesondere in Bezug auf eine Mittelachse des Grundkörpers (12) diametral gegenüberliegende, Flächen (16) aufweist.

4. Fluidverbindungseinheit (10, 110) nach einem der vorhergehenden Ansprüche,
**dadurch gekennzeichnet, dass** der Grundkörper (12) aus einem Hochtemperaturkunststoff, insbesondere aus PPSU, ausgebildet ist.

5. Fluidverbindungseinheit (10, 110) nach einem der vorhergehenden Ansprüche,
**dadurch gekennzeichnet, dass** der Grundkörper (12) und/oder das Einsatzelement (14, 114, 214) unter Verwendung eines Spritzgussverfahrens hergestellt sind/ist.

6. Fluidverbindungseinheit (10, 110) nach einem der vorhergehenden Ansprüche,
**dadurch gekennzeichnet, dass** das Einsatzelement (14, 114, 214) PE_RT oder vernetztes Polyethylen, zum Beispiel PEX oder PEX_C, oder PTFE umfasst.

7. Fluidverbindungseinheit (10, 110) nach einem der vorhergehenden Ansprüche,
**dadurch gekennzeichnet, dass** das Einsatzelement (14, 114, 214) an seinem dem Innengewinde (28, 228) entgegengesetzten Ende einen zylindrischen Bereich (18) aufweist, dessen Außendurchmesser in etwa dem Durchmesser des Gewindes (28, 228) entspricht und welcher in seinem Inneren einen Fluidströmungskanal (30) definiert.

8. Fluidverbindungseinheit (10, 110) nach dem vorhergehenden Anspruch, **dadurch gekennzeichnet, dass** der zylindrische Bereich (18) des Einsatzelements (14, 114, 214) eine oder mehrere in Umfangsrichtung umlaufende Nuten (20) zur Aufnahme eines Dichtelementes oder Dichtschnur aufweist.

9. Fluidverbindungseinheit (10, 110) nach einem der vorhergehenden Ansprüche,
**dadurch gekennzeichnet, dass** das Innengewinde (28, 228) des Einsatzelements (14, 114, 214) konisch ausgebildet ist.

10. Fluidverbindungseinheit (10, 110) nach einem der vorhergehenden Ansprüche,
**dadurch gekennzeichnet, dass** die wenigstens eine Ausnehmung (26) des Grundkörpers (12), mit welcher ein jeweiliger Rastnoppen (22) im verbundenen Zustand von Grundkörper (12) und Einsatzelement (14, 214) eingreift, als Durchgangsloch ausgebildet ist, welches die Wandung des Grundkörpers (12) vollständig durchdringt.

11. Fluidverbindungseinheit (10, 110) nach einem der vorhergehenden Ansprüche,
**dadurch gekennzeichnet, dass** der Grundkörper (12) eine Mehrzahl von Ausnehmungen (26) aufweist, welche jeweils eine Mittelachse ausweisen, von welchen wenigstens zwei, insbesondere alle, im Wesentlichen parallel zueinander verlaufen.

## Claims

1. Fluid connection unit (10, 110), which is designed to connect a fluid line with a connector, comprising
a basic body (12), which is made of plastic, and an insert element (14, 114, 214), which is made of plastic,
wherein the basic body (12) defines a fluid flow channel (32) in its interior, which extends from a first longitudinal end of the basic body (12) to a second longitudinal end of the basic body (12),
wherein the insert element (14, 114, 214) has an internal thread (28, 228) for connection with the connector,
wherein a nozzle (44) is arranged at the first longitudinal end of the basic body (12), which is configured for connection with the fluid line,
wherein a receptacle (24) is arranged at the second longitudinal end of the basic body (12), which is configured to receive the insert element (14, 114, 214) in such a manner that an operationally secure connection is formed between the base body (12) and the insert element (14, 114, 214), which is non-destructively inseparable in at least one direction opposite to the insertion direction of the insert element (14, 114, 214) into the basic body (12),
**characterized in that the** insert element (14, 214) has at least one locking lug (22) projecting radially outward on its outer side, which is arranged to engage with a corresponding recess (26) of the basic body (12).

2. Fluid connection unit (10, 110) according to claim 1,
**characterized in that** the insert element (14, 114, 214) in the area (16) where the insert element (14, 114, 214) connects with the basic body (12) is designed to be non-rotationally symmetrical, in particular hexagonal, so that a rotation of the insert element (14, 114, 214) relative to the basic body (12) in the connected state is essentially prevented.

3. Fluid connection unit (10, 110) according to any one of the preceding claims,
**characterized in that** the basic body (12) has on its outer side at least two surfaces (16) that run parallel to each other, and in particular are diametrically opposite with respect to a central axis of the basic body (12).

4. Fluid connection unit (10, 110) according to any one of the preceding claims,
**characterized in that** the basic body (12) is made of a high-temperature plastic, in particular PPSU.

5. Fluid connection unit (10, 110) according to any one of the preceding claims,
**characterized in that** the basic body (12) and/or the insert element (14, 114, 214) is/are manufactured using an injection molding process.

6. Fluid connection unit (10, 110) according to any one of the preceding claims,
**characterized in that** the insert element (14, 114, 214) comprises PE_RT or crosslinked polyethylene, for example PEX or PEX_C, or PTFE.

7. Fluid connection unit (10, 110) according to any one of the preceding claims,
**characterized in that** the insert element (14, 114, 214) has at its end opposite the internal thread (28, 228) a cylindrical section (18), the outer diameter of which approximately corresponds to the diameter of the thread (28, 228) and which defines a fluid flow channel (30) within its interior.

8. Fluid connection unit (10, 110) according to the preceding claim,
**characterized in that** the cylindrical area (18) of the insert element (14, 114, 214) has one or more circumferential grooves (20) for receiving a sealing element or sealing cord.

9. Fluid connection unit (10, 110) according to any one of the preceding claims,
**characterized in that** the internal thread (28, 228) of the insert element (14, 114, 214) is conically shaped.

10. Fluid connection unit (10, 110) according to any one of the preceding claims,
**characterized in that** the at least one recess (26) of the basic body (12), with which a respective locking lug (22) engages in the connected state of the basic body (12) and the insert element (14, 214), is designed as a through-hole which completely penetrates the wall of the basic body (12).

11. Fluid connection unit (10, 110) according to any one of the preceding claims,
**characterized in that** the basic body (12) has a plurality of recesses (26), each having a central axis, of which at least two, in particular all, run essentially parallel to each other.

## Revendications

1. Une unité de raccordement fluidique (10, 110) qui est conçue pour raccorder une conduite de fluide à une pièce de raccordement, comprenant un corps de base (12) qui est réalisé en matière plastique, et un élément d'insertion (14, 114, 214) qui est réalisé en matière plastique,
dans lequel le corps de base (12) définit à l'intérieur un canal d'écoulement de fluide (32) qui s'étend d'une première extrémité longitudinale du corps de base (12) à une deuxième extrémité longitudinale du corps de base (12),
dans lequel l'élément d'insertion (14, 114, 214) présente un filetage intérieur (28, 228) pour le raccordement avec la pièce de raccordement,
dans lequel un manchon (44) est disposé à la première extrémité longitudinale du corps de base (12), lequel est conçu pour le raccordement avec la conduite de fluide,
dans lequel un logement (24) est disposé à la deuxième extrémité longitudinale du corps de base (12), lequel est conçu pour recevoir l'élément d'insertion (14, 114, 214) de telle sorte qu'une liaison stable en fonctionnement est formée entre le corps de base (12) et l'élément d'insertion (14, 114, 214), qui est indémontable sans destruction au moins dans une direction opposée à la direction d'introduction de l'élément d'insertion (14, 114, 214) dans le corps de base (12),
**caractérisée en ce que** l'élément d'insertion (14, 214) présente sur sa face extérieure au moins un ergot d'encliquetage (22) faisant saillie radialement vers l'extérieur, qui est conçu pour s'enclencher dans un évidement correspondant (26) du corps de base (12).

2. L'unité de raccordement fluidique (10, 110) selon la revendication 1,
**caractérisée en ce que** l'élément d'insertion (14, 114, 214) est conçu de manière non symétrique en rotation, en particulier de forme hexagonale, dans la zone (16) dans laquelle l'élément d'insertion (14, 114, 214) entre en liaison avec le corps de base (12), de sorte qu'une rotation de l'élément d'insertion (14, 114, 214) par rapport au corps de base (12) est essentiellement empêchée dans l'état assemblé.

3. L'unité de raccordement fluidique (10, 110) selon l'une des revendications précédentes,
**caractérisée en ce que** le corps de base (12) présente sur sa face extérieure au moins deux surfaces (16) parallèles l'une à l'autre et diamétralement opposées, en particulier par rapport à un axe central du corps de base (12).

4. L'unité de raccordement fluidique (10, 110) selon l'une des revendications précédentes,
**caractérisée en ce que** le corps de base (12) est réalisé en une matière plastique haute température, en particulier en PPSU.

5. L'unité de raccordement fluidique (10, 110) selon l'une des revendications précédentes,
**caractérisée en ce que** le corps de base (12) et/ou l'élément d'insertion (14, 114, 214) est/sont fabriqués par moulage par injection.

6. L'unité de raccordement fluidique (10, 110) selon l'une des revendications précédentes,
**caractérisée en ce que** l'élément d'insertion (14, 114, 214) comprend du PE_RT ou du polyéthylène réticulé, par exemple du PEX ou du PEX_C, ou du PTFE.

7. L'unité de raccordement fluidique (10, 110) selon l'une des revendications précédentes,
**caractérisée en ce que** l'élément d'insertion (14, 114, 214) présente à son extrémité opposée au filetage intérieur (28, 228) une zone cylindrique (18) dont le diamètre extérieur correspond approximativement au diamètre du filetage (28, 228) et qui définit à l'intérieur un canal d'écoulement de fluide (30).

8. L'unité de raccordement fluidique (10, 110) selon la revendication précédente, **caractérisée en ce que** la partie cylindrique (18) de l'élément d'insertion (14, 114, 214) présente une ou plusieurs rainures (20) périphériques dans la direction circonférentielle destinées à recevoir un élément d'étanchéité ou un cordon d'étanchéité.

9. L'unité de raccordement fluidique (10, 110) selon l'une des revendications précédentes,
**caractérisée en ce que** le filetage intérieur (28, 228) de l'élément d'insertion (14, 114, 214) est conçu de manière conique.

10. L'unité de raccordement fluidique (10, 110) selon l'une des revendications précédentes,
**caractérisée en ce que** que ledit au moins un évidement (26) du corps de base (12), dans lequel s'enclenche un ergot d'encliquetage (22) respectif lorsque le corps de base (12) et l'élément d'insertion (14, 214) sont assemblés, est conçu en trou traversant, qui traverse complètement la paroi du corps de base (12).

11. L'unité de raccordement fluidique (10, 110) selon l'une des revendications précédentes,
**caractérisée en ce que** le corps de base (12) présente une pluralité d'évidements (26) qui présentent chacun un axe central, dont au moins deux, en particulier tous, s'étendent sensiblement parallèlement les uns aux autres.
